# EUROPEAN PATENT APPLICATION

(11) **EP 4 178 310 A1**
(43) Date of publication of application: **10.05.2023**
(21) Application number: 21838450.1
(22) Date of filing: 06.07.2021
(51) Int. Cl.: H04W 76/27

(54) **MESSAGE SENDING METHOD AND APPARATUS, MESSAGE RECEIVING METHOD AND APPARATUS, AND COMMUNICATION DEVICE**

(30) Priority: 06.07.2020 CN 202010643208
(71) Applicant: Vivo Mobile Communication Co., Ltd., Dongguan, Guangdong 523863 (CN)
(72) Inventor: ZHONG, Tingting, Dongguan, Guangdong 523863 (CN); WU, Yumin, Dongguan, Guangdong 523863 (CN)
(74) Representative: Raffay & Fleck
(86) International application number: PCT/CN2021/104705
(87) International publication number: WO 2022/007785

(57) **Abstract**

The present application relates to the technical field of communications. Disclosed are a message sending method and apparatus, a message receiving method and apparatus, and a communication device. The specific implementation solution comprises: if a terminal is in a non-RRC connected state and has a need to send a target RRC message to a network side device, sending the target RRC message in the non-RRC connected state, the target RRC message being an RRC message that requires activated access stratum security. Thus, the terminal may not need to send the target RRC message after other conditions of triggering establishment or recovery of a RRC connection are met and the RRC connection is successfully established or recovered, but may directly send the target RRC message in the non-RRC connected state, thereby reducing the time delay.

## Description

### CROSS-REFERENCE TO RELATED APPLICATION

This application claims priority to Chinese Patent Application No. 202010643208.0, filed with the National Intellectual Property Administration, PRC on July 06, 2020, which is incorporated herein by reference in its entirety.

### TECHNICAL FIELD

This application relates to the field of communications technologies, and specifically, to a message sending method and apparatus, a message receiving method and apparatus, and a communication device.

### BACKGROUND

Currently, when having a need to send an RRC message that requires activated AS security (activated AS security) to a network side device, a non-radio resource control (Radio Resource Control, RRC) connected (NON-RRC CONNECTED) terminal can send the RRC message only after other connections of triggering establishment or resumption of an RRC connection are met and the RRC connection is successfully established or resumed. Based on the above, a delay of sending the RRC message by the existing terminal in the non-RRC connected state is relatively high.

### SUMMARY

An objective of embodiments of this application is to provide a message sending method and apparatus, a message receiving method and apparatus, and a communication device, to resolve a problem that a delay of sending an RRC message that requires activated AS security by an existing non-RRC connected terminal is relatively high.

To resolve the foregoing technical problems, this application is implemented as follows:
According to a first aspect, the present disclosure provides a message sending method, applied to a terminal, the method including:
sending a target RRC message in a non-radio resource control RRC connected state in a case that the terminal is in the non-RRC connected state and has a need to send the target RRC message to a network side device, where
the target RRC message is an RRC message that requires activated access stratum security.

According to a second aspect, the present disclosure provides a message receiving method, applied to a network side device, the method includes:
receiving a target RRC message from a terminal, where
the target RRC message is an RRC message that requires activated access stratum security; and the target RRC message is sent in a non-RRC connected state in a case that the terminal is in the non-RRC connected state and has a need to send the target RRC message.

According to a third aspect, the present disclosure provides a message sending apparatus, applied to a terminal, the apparatus including:
a first sending module, configured to send a target RRC message in a non-RRC connected state in a case that the terminal is in the non-RRC connected state and has a need to send the target RRC message to a network side device, where
the target RRC message is an RRC message that requires activated access stratum security.

According to a fourth aspect, the present disclosure provides a message receiving apparatus, applied to a network side device, the apparatus including:
a receiving module, configured to receive a target RRC message from a terminal, where
the target RRC message is an RRC message that requires activated access stratum security; and the target RRC message is sent in a non-RRC connected state in a case that the terminal is in the non-RRC connected state and has a need to send the target RRC message.

According to a fifth aspect, a terminal is provided, including a processor, a memory, and a program or instructions stored in the memory and executable on the processor, the program or instructions, when executed by the processor, implementing the steps of the method according to the first aspect.

According to a sixth aspect, the present disclosure provides a network side device, including a processor, a memory, and a program or instructions stored in the memory and executable on the processor, the program or instructions, when executed by the processor, implementing the steps of the method according to the second aspect.

According to a seventh aspect, the present disclosure provides a readable storage medium, the readable storage medium storing a program or instructions, the program or instructions, when executed by the processor, implementing the step of the method according to the first aspect, or the step of the method according to the second aspect.

According to an eighth aspect, the present disclosure provides a chip, including a processor and a communication interface, the communication interface being coupled to the processor, and the processor being configured to run a program or instructions to implement the step of the method according to the first aspect, or the step of the method according to the second aspect.

In the embodiments of this application, a terminal may send a target RRC message in a non-RRC connected state in a case that the terminal is in the non-RRC connected state and has a need to send the target RRC message to a network side device, where the target RRC message is an RRC message that requires activated access stratum security. In this way, the terminal may not need to send the target RRC message after other connections of triggering establishment or resumption of an RRC connection are met and the RRC connection is successfully established or resumed, but may directly send the target RRC message in the non-RRC connected state, thereby reducing a delay. Further, resource waste and energy consumption may also be avoided.

### BRIEF DESCRIPTION OF THE DRAWINGS

FIG. 1 is a block diagram of a wireless communication system according to an embodiment of this application.
FIG. 2 is a flowchart of a message sending method according to an embodiment of this application.
FIG. 3 is a flowchart of a process of sending a target RRC message according to an Embodiment 1 of this application.
FIG. 4 is a flowchart of a process of sending a target RRC message according to an Embodiment 2 of this application.
FIG. 5 is a flowchart of a process of sending a target RRC message according to an Embodiment 3 of this application.
FIG. 6 is a schematic structural diagram of a message sending apparatus according to an embodiment of this application.
FIG. 7 is a flowchart of a message receiving method according to an embodiment of this application.
FIG. 8 is a schematic structural diagram of a message receiving apparatus according to an embodiment of this application.
FIG. 9 is a schematic structural diagram of a communication device according to an embodiment of this application.
FIG. 10 is a schematic structural diagram of a terminal according to an embodiment of this application.
FIG. 11 is a schematic structural diagram of a network side device according to an embodiment of this application.

### DETAILED DESCRIPTION

The following clearly and completely describes the technical solutions in the embodiments of this application with reference to the accompanying drawings in the embodiments of this application. Apparently, the described embodiments are some rather than all of the embodiments of this application. All other embodiments obtained by a person skilled in the art based on the embodiments of this application without creative efforts shall fall within the protection scope of this application.

In the specification and the claims of this application, the terms "first", "second", and so on are intended to distinguish similar objects but do not necessarily indicate a specific order or sequence. It is to be understood that the data termed in such a way is interchangeable in proper circumstances, so that the embodiments of this application can be implemented in other sequences than the sequence illustrated or described herein. In addition, the objects distinguished by "first", "second", and the like are usually of one type, and a quantity of objects is not limited, for example, there may be one or more first objects. In addition, "and/or" used in the specification and the claims represents at least one of the connected objects, and a character "/" in this specification generally indicates an "or" relationship between the associated objects. For example, "A and/or B" represents the following three cases that "Only A exists, only B exists, and both A and B exist". In addition, "at least one of A or B" also represents the following three cases that "Only A exists, only B exists, and both A and B exist".

It is to be noted that, the technologies described in the embodiments of this application are not limited to a long term evolution (Long Term Evolution, LTE)/LTE-Advanced (LTE-Advanced, LTE-A) system, or may be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-Carrier Frequency-Division Multiple Access, SC-FDMA), and another system. In the embodiments of this application, the terms "system" and "network" are usually interchangeably used, and the technology described herein can be applied to the systems and radio technologies mentioned above, and can also be applied to other systems and radio technologies. However, although the technologies are also applicable to applications other than NR system applications, for example, a 6^{th} generation (6^{th} Generation, 6G) communication system, a new radio (NR) system is exemplarily described in the following descriptions, and the term "NR" is used in most of the following descriptions.

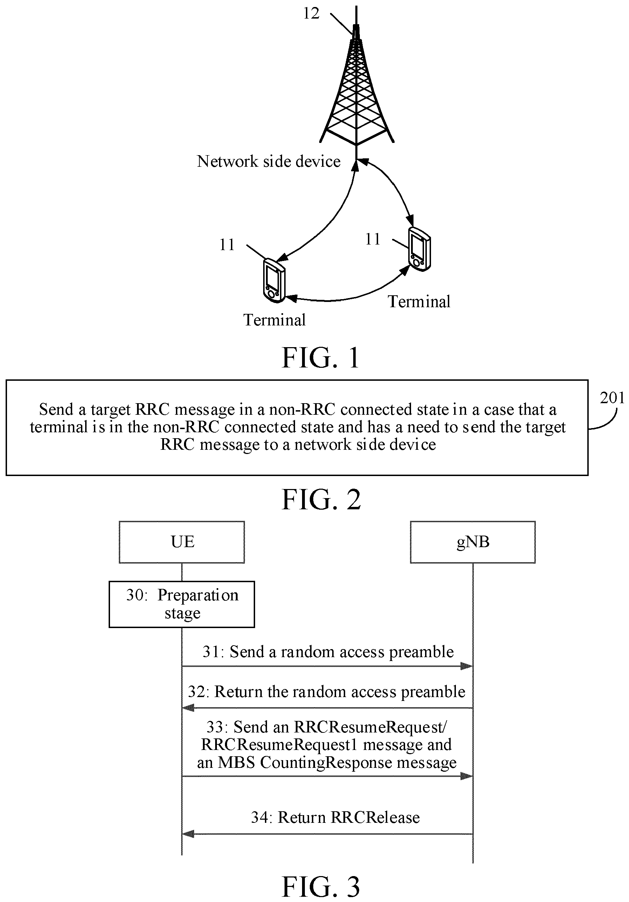

FIG. 1 shows a block diagram of a wireless communication system to which an embodiment of this application is applicable. The communication system includes a terminal 11 and a network side device 12. The terminal 11 may also be referred to as a terminal device or a user equipment (User Equipment, UE). The terminal 11 may be a terminal side device such as a mobile phone, a tablet personal computer (Tablet Personal Computer), a laptop computer (Laptop Computer) or notebook computer, a Personal Digital Assistant (Personal Digital Assistant, PDA), a palmtop computer, a notebook, an ultra-mobile personal computer (ultra-mobile personal computer, UMPC), a Mobile Internet Device (Mobile Internet Device, MID), a wearable device (Wearable Device), a vehicle user equipment (VUE), a pedestrian user equipment (PUE), or the like. The wearable device includes a bracelet, a headset, glasses, and the like. It is to be noted that, the specific type of the terminal 11 is not limited in the embodiments of this application. The network side device 12 may be a base station or a core network. The base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a WLAN access point, a Wi-Fi node, a transmitting receiving point (Transmitting Receiving Point, TRP), or another suitable term in the field. The base station is not limited to a specific technical term as long as the same technical effect is achieved. It is to be noted that, in the embodiments of this application, a base station in the NR system is only used as an example, but the specific type of the base station is not limited.

For ease of understanding the embodiments of this application, the following content is first described.

To resolve a problem that a delay of sending an RRC message that requires activated AS security by an existing non-RRC connected terminal (for example, a NON-RRCCONNECTED UE) is relatively high, an embodiment of this application provides a method in which the NON-RRCCONNECTED UE may directly send the RRC message in a NON-RRCCONNECTED state in a case that the UE has a need to send the RRC message that requires activated AS security to the network side device.

In this embodiment of this application, the RRC message that requires activated AS security may be referred to as a target RRC message. In other words, the target RRC message mentioned in the following embodiments is an RRC message that requires activated AS security.
1. Optionally, the target RRC message may be an RRC message related to a configuration of a first transmission manner. In this case, the terminal has a need to send the target RRC message to the network side device in a case that at least one of the following is met:
   the terminal supports transmission in the first transmission manner;
   a network supports transmission in the first transmission manner, for example, a system message includes a corresponding indication;
   a size of a Media Access Control Protocol Data Unit (Media Access Control Protocol Data Unit, MAC PDU) including the target RRC message is less than or equal to a maximum transport block size (Transport Block Size, TBS) supported by the terminal that is defined based on a terminal category; or
   the terminal meets at least one of the following: the terminal is interested in the configuration of the first transmission manner, the terminal is no longer interested in the configuration of the first transmission manner, or the terminal needs to update the configuration of the first transmission manner.

   It is to be noted that, the first transmission manner may be a transmission manner similar to a PUR (Preconfigured Uplink Resource) transmission manner or a preconfigured PUSCH resource transmission manner of small data transmission (Small Data Transmission, SDT), which may also be the PUR transmission manner or the preconfigured PUSCH resource transmission manner of SDT in some cases. This is not limited herein. In this case, the target RRC message may be auxiliary information related to a configuration of preconfigured PUSCH resources, for example, a PURConfigurationRequest message. Using the preconfigured PUSCH resource transmission manner of small data transmission as an example, the UE has the need to send the target RRC message to the network side device in a case that at least one of the following is met:
   the UE supports transmission in the preconfigured PUSCH resource transmission manner;
   the network supports transmission in the preconfigured PUSCH resource transmission manner, for example, the system message includes a corresponding indication;
   a size of the MAC PDU including the target RRC message is less than or equal to a maximum TBS supported by the UE that is defined based on a UE category; or
   the UE is interested in the configuration of the preconfigured PUSCH resources, or the UE is no longer interested, or the UE needs to update the configuration of the preconfigured PUSCH resources.
2. Optionally, the target RRC message may be an RRC message related to multicast and broadcast service (Multicast and Broadcast Service, MBS) counting (Counting), for example, an MBSCountingResponse message. In this case, the terminal has the need to send the target RRC message to the network side device in a case that at least one of the following is met:
   the terminal has an MBS capability;
   a network supports an MBS, for example, a system message includes a corresponding indication;
   a size of a MAC PDU including the target RRC message is less than or equal to a maximum TBS supported by the terminal that is defined based on a terminal category;
   an RRC layer of the terminal receives a control message related to MBS counting (for example, an MBSCountingRequest message) that is sent by the network side device; or
   the terminal is receiving or is interested in receiving at least one MBS indicated in the control message related to MBS counting (for example, an MBSCountingRequest message).
3. Optionally, the target RRC message may be an RRC message related to an MBS interest indication (Interest Indication), for example, an MBSInterestIndication message. In this case, the terminal has the need to send the target RRC message to the network side device in a case that at least one of the following is met:
   the terminal has an MBS capability;
   a network supports an MBS, for example, a system message includes a corresponding indication;
   a size of a MAC PDU including the target RRC message is less than or equal to a maximum TBS supported by the terminal that is defined based on a terminal category;
   the terminal receives control information related to the MBS that is sent by the network side device, for example, the control information related to the MBS may be sent through the system message or dedicated RRC signaling;
   the terminal enters or leaves a service area, for example, upon entering the service area (upon entering the service area) by the UE or upon leaving the service area by the UE;
   an MBS session (session) starts or stops, for example, upon starting the MBS session or upon stopping the MBS session;
   content of an MBS interest indication message changes; or
   a cell or a base station that sends the control information related to the MBS changes.

It may be understood that, in addition to the foregoing three RRC messages, the target RRC message may also be selected as any other RRC message that requires activated AS security. This is not limited herein.

The message sending method and the message receiving method provided in the embodiments of this application are described in detail below with reference to the accompanying drawings by using specific embodiments and application scenarios thereof.

Referring to FIG. 2, FIG. 2 is a flowchart of a message sending method according to an embodiment of the present invention. The method is applied to a terminal. As shown in FIG. 2, the method includes the following steps:
Step 201: Send a target RRC message in a non-RRC connected state in a case that a terminal is in the non-RRC connected state and has a need to send the target RRC message to a network side device.

In this embodiment, the target RRC message is an RRC message that requires activated AS security.

In this embodiment of this application, the terminal may send a target RRC message in a non-RRC connected state in a case that the terminal is in the non-RRC connected state and has a need to send the target RRC message to a network side device. In this way, the terminal may not need to send the target RRC message after other connections of triggering establishment or resumption of an RRC connection are met and the RRC connection is successfully established or resumed, but may directly send the target RRC message in the non-RRC connected state, thereby reducing a delay. Further, resource waste and energy consumption may also be avoided.

In this embodiment of this application, the terminal may send the target RRC message in the non-RRC connected state through an RRC connection resume (RRC connection resume) process. Optionally, before the target RRC message is sent, the terminal may further trigger the RRC connection resume process to generate an RRCResumeRequest/RRCResumeRequest1 (RRCResumeRequest/RRCResumeRequest1) message and submit the RRCResumeRequest/RRCResumeRequest1 message to a bottom layer; and trigger generation (or referred to as production) of content of the target RRC message, and trigger submission of the target RRC message to the bottom layer. It may be understood that, the RRCResumeRequest/RRCResumeRequest1 message and the target RRC message are generated at the RRC layer, and the bottom layer herein is a protocol layer below the RRC layer, for example, a packet data convergence protocol (Packet Data Convergence Protocol, PDCP) layer, a Radio Link Control (Radio Link Control, RLC) layer, and a MAC layer.

Optionally, in the RRC connection resume process, the terminal may further set a resume cause ResumeCause value. The resumeCause value is at least one of the following:
a multiplexed first ResumeCause value, for example, mo-data, mo-signal, and the like; or
a second ResumeCause value.

In an implementation, the second ResumeCause value may not be related to the target RRC message, that is, all target RRC messages are unified, for example, a MO-RRCmessage, and the ResumeCause value is set to the MO-RRCmessage. Being not related to the target RRC message may not be related to a message type or form of the target RRC message, or may not be related to the content of the target RRC message.

In another implementation, the second ResumeCause value may be related to the target RRC message, for example, an "XXConfigurationRequest message", and the ResumeCause value is set to the "XXConfigurationRequest message". Being related to the target RRC message may be related to the message type or form of the target RRC message, or may be related to the content of the target RRC message.

Optionally, in the RRC connection resume process, the terminal may perform at least one of the following:
1) determining to skip performing unified access control (Unified Access Control, UAC) check, that is, access attempt being directly allowed;
2) performing UAC check by using a set first access category (Access category) and/or access identity(ies) (Access identity(ies)), that is, multiplexing the first Access category and/or Access identity(ies), for example, setting the Access category to 7, and setting the Access identity to 0 and the like; or
3) performing UAC check by using a set second access category and/or access identity(ies), that is, performing UAC check by using a second Access category and/or Access identity(ies).

In an implementation, the second Access category and/or Access identity(ies) may not be related to the target RRC message, that is, all target RRC messages are unified to a same value. For example, the Access category is uniformly set to 11, and the Access identity is uniformly set to 6 and the like. Being not related to the target RRC message may not be related to a message type or form of the target RRC message, or may not be related to the content of the target RRC message.

In another implementation, the second Access category and/or Access identity(ies) may be related to the target RRC message. For example, for the "XXConfigurationRequest message", the Access category is set to 11, and the Access identity is set to 6 and the like. Being related to the target RRC message may be related to the message type or form of the target RRC message, or may be related to the content of the target RRC message.

Optionally, a trigger condition of generating the content of the target RRC message may include at least one of the following:
1) immediately triggering generation of the content of the target RRC message in a case that the terminal has a need to send the target RRC message to the network side device; or
2) triggering generation of the content of the target RRC message in the RRC connection resume process. In other words, upon having a need to send the target RRC message to the network side device, the terminal first triggers an RRC connection resume process, and then triggers generation of the content of the target RRC message in the RRC connection resume process. In this case, the trigger condition may include at least one of the following:
   (1) triggering generation of the content of the target RRC message in an initiation (Initiation) stage of the RRC connection resume process;
   (2) triggering generation of the content of the target RRC message before resumption of an SRB1 in a process of performing actions related to transmission of the RRCResumeRequest/RRCResumeRequest1 message (Actions related to transmission of RRCResumeRequest or RRCResumeRequest1 message);
   (3) immediately triggering generation of the content of the target RRC message after resumption of the SRB1 in the process of performing actions related to transmission of the RRCResumeRequest/RRCResumeRequest1 message (Actions related to transmission of RRCResumeRequest or RRCResumeRequest1 message); or
   (4) immediately triggering generation of the content of the target RRC message after submission of the RRCResumeRequest/RRCResumeRequest1 message to the bottom layer in the process of performing actions related to transmission of the RRCResumeRequest/RRCResumeRequest1 message (Actions related to transmission of RRCResumeRequest or RRCResumeRequest1 message).

Optionally, a trigger condition of submitting the target RRC message to the bottom layer may include at least one of the following:
1) immediately triggering submission of the target RRC message to the bottom layer after resumption of an SRB 1 in the process of performing actions related to transmission of the RRCResumeRequest/RRCResumeRequest1 message (Actions related to transmission of RRCResumeRequest or RRCResumeRequest1 message); or
2) immediately triggering submission of the target RRC message to the bottom layer after submission of the RRCResumeRequest/RRCResumeRequest1 message to the bottom layer in the process of performing actions related to transmission of the RRCResumeRequest/RRCResumeRequest1 message (Actions related to transmission of RRCResumeRequest or RRCResumeRequest1 message).

Optionally, after the content in the target RRC message is generated, the terminal may store the content in the target RRC message in a first form, or determine to skip storing the content in the target RRC message.

Further, the first form may include at least one of the following: a variable, an array, a struct, or any mathematical expression form. In other words, after the content of the target RRC message is generated, the terminal may store the content in any mathematical expression form such as the variable, the array, and/or the struct.

Optionally, when sending the target RRC message, the terminal may multiplex the target RRC message and the RRCResumeRequest/RRCResumeRequest1 message into a same MAC PDU and send the MAC PDU to the network side device. Further, the MAC PDU may include at least one of the following:
the RRCResumeRequest/RRCResumeRequest1 message is before the target RRC message; or
the RRCResumeRequest/RRCResumeRequest1 message is after the target RRC message.

It is to be noted that, that the terminal sends the target RRC message in the non-RRC connected state may be through, but is not limited to, a random access process, transmission in a first transmission manner, transmission in a second transmission manner, or the like. The random access process may be a conventional random access process, for example, a 2-step (2-step) random access process or a 4-step (4-step) random access process. Transmission in the first transmission manner and transmission in the second transmission manner involve completely different content. More specifically, the first transmission manner may be a transmission manner similar to a PUR transmission manner or a preconfigured PUSCH resource transmission manner of small data transmission (Small Data Transmission, SDT), which may also be the PUR transmission manner or the preconfigured PUSCH resource transmission manner of SDT in some cases. The second transmission manner may be a transmission manner similar to early data transmission (Early Data Transmission, EDT) transmission manner or a RACH-based transmission manner of small data transmission, which may also be the EDT transmission manner or the RACH-based transmission manner of small data transmission in some cases. For example, transmission in the first transmission manner is PUR transmission, preconfigured PUSCH resource transmission of SDT, transmission similar to PUR transmission, transmission similar to the preconfigured PUSCH resource transmission manner of SDT, or the like. The second transmission manner may be, for example, EDT, transmission similar to EDT, RACH-based transmission of small data transmission, transmission similar to RACH-based transmission of small data transmission, or the like.

Sending of the target RRC message is described in detail below with reference to different solutions.

Solution 1: The UE completes sending of the target RRC message through a conventional random access process (for example, an NR 2-step/4-step RACH).

### 1. Preparation stage

In the preparation stage, the UE may trigger an RRC connection resume process to generate an RRCResumeRequest/RRCResumeRequest1 message and send the RRCResumeRequest/RRCResumeRequest1 message to a bottom layer, trigger generation of content of the target RRC message, and trigger submission of the target RRC message to the bottom layer.
1) In an RRCResume process, the UE may set a ResumeCause value, which is at least any one of the following:
   (1) multiplexing a first ResumeCause value, for example, mo-data, mo-signal, and the like; or
   (2) using a second ResumeCause value that is set, which is at least any one of the following:
      not related to the target RRC message, that is, all target RRC messages are unified, for example, a MO-RRCmessage, and the ResumeCause value is set to the MO-RRCmessage; or
      related to the target RRC message, for example, an "XXConfigurationRequest message", and the ResumeCause value is set to the "XXConfigurationRequest message".
2) In the RRCResume process, the UE may perform at least any one of the following:
   (1) determining to skip performing UAC check, that is, access attempt being directly allowed;
   (2) performing UAC check by multiplexing a first Access category and/or Access identity(ies), for example, setting the Access category to 7, and setting the Access identity to 0 and the like; or
   (3) performing UAC check by using a set second Access category and Access identity(ies), which is at least any one of the following:
      not related to the target RRC message, that is, all target RRC messages are unified to a same value, for example, the Access category is uniformly set to 11, and the Access identity is uniformly set to 6; or
      related to the target RRC message, for example, for the "XXConfigurationRequest message", the Access category is set to 11, and the Access identity is set to 6.
3) A trigger time point at which the target RRC message is generated is at least any one of the following:
   (1) immediately triggering, by the UE, generation of the content of the target RRC message upon having a need to send the target RRC message to the network side device; or
   (2) upon having a need to send the target RRC message to the network side device, first triggering, by the UE, an RRC connection resume process, and then triggering generation of the content of the target RRC message in the RRC connection resume process, which is at least any one of the following:
      triggering, by the UE, generation of the content of the target RRC message in an initiation stage of the RRC connection resume process;
      immediately triggering generation of the content of the target RRC message before resumption of an SRB1 in a "process of performing actions related to transmission of the RRCResumeRequest/RRCResumeRequest1 message";
      immediately triggering generation of the content of the target RRC message after resumption of the SRB1 in the "process of performing actions related to transmission of the RRCResumeRequest/RRCResumeRequest1 message"; or
      immediately triggering generation of the content of the target RRC message after submission of the RRCResumeRequest/RRCResumeRequest1 message to the bottom layer in the "process of performing actions related to transmission of the RRCResumeRequest/RRCResumeRequest1 message".
4) After the content of the target RRC message is generated, the UE may store the content of the target RRC message as any mathematical expression form such as a variable, an array, and/or a struct, or may determine to skip storage.
5) A trigger time point at which the target RRC message is submitted to the bottom layer is at least any one of the following:
   (1) immediately triggering submission of the target RRC message to the bottom layer after resumption of the SRB 1 in the "process of performing actions related to transmission of the RRCResumeRequest/RRCResumeRequest1 message"; or
   (2) immediately triggering submission of the target RRC message to the bottom layer after submission of the RRCResumeRequest/RRCResumeRequest1 message to the bottom layer in the "process of performing actions related to transmission of the RRCResumeRequest/RRCResumeRequest1 message".

### 2. Random access (RACH) stage

In the RACH stage, a MAC layer of the UE initiates a random access process, and submits a MAC PDU carrying the RRCResumeRequest/RRCResumeRequest1 message and the target RRC message to the bottom layer and send the MAC PDU to the network side device.
6) A trigger event of the random access process is at least any one of the following:
   (1) multiplexing a first trigger event, for example, Transition from RRC_INACTIVE, and the like.
   (2) using a second trigger event, which is at least any one of the following:
      not related to the target RRC message, that is, all target RRC messages are unified, for example, a MO-RRCmessage; or
      related to the target RRC message, for example, sending of a single target RRC message is used as a trigger event, for example, "XXConfigurationRequest message", and the like.
7) A configuration of all resources and parameters in the random access process, for example, a preamble preamble, PRACH resources, an UL grant UL grant in random access response (Random Access Response, RAR), MsgA physical uplink shared channel (Physical Uplink Shared Channel, PUSCH) resources, synchronization signal and PBCH block (Synchronization Signal and PBCH block, SSB) resources, a physical downlink control channel (Physical Downlink Control Channel, PDCCH) search space, or the like is at least any one of the following:
   (1) completely performing configuration in a separate manner, for example, all the resources and parameters being separately configured;
   (2) completely multiplexing a first configuration, for example, all the resources and parameters multiplexing the first configuration; or
   (3) partially multiplexing the first configuration and partially performing configuration in a separate manner.
8) The target RRC message and an RRCResumeRequest/RRCResumeRequest1 message are multiplexed into a same MAC PDU and sent to the network side device, which includes at least any one of the following:
   the RCResumeRequest/RRCResumeRequest1 message being before the target RRC message, where in other words, the RCResumeRequest/RRCResumeRequest1 message may be at the front of the MAC PDU, and the target RRC message is at the back of the MAC PDU; or
   the RCResumeRequest/RRCResumeRequest1 message being after the target RRC message, where in other words, the target RRC message may be at the front of the MAC PDU, and the RRCResumeRequest/RRCResumeRequest1 message may be at the back of the MAC PDU.

Solution 2: The UE completes sending of the target RRC message through transmission in the first transmission manner (for example, PUR transmission, transmission similar to PUR transmission, and the like).

### 1. Preparation stage

Upon having a need to send an RRC message (a target RRC message) that requires activated AS security, an RRC layer of the UE may request resumption of an RRC connection and initiate transmission in a first transmission manner (for example, PUR transmission), trigger an RRCResume process to generate an RRCResumeRequest/RRCResumeRequest1 message and send the RRCResumeRequest/RRCResumeRequest1 message to a bottom layer, trigger generation of content of the target RRC message, and trigger submission of the target RRC message to the bottom layer.
1) An initiation condition of transmission in the first transmission manner may be at least one of the following:
   the UE requests resumption of the RRC connection at the RRC layer, where a value of an RRCResumeCause is at least any one of the following:
      (1) multiplexing a first ResumeCause value, for example, mo-data, mo-signal, and the like; or
      (2) using a second ResumeCause value that is set, which is at least any one of the following:
         I is not related to the target RRC message, that is, all target RRC messages are unified, for example, a MO-RRCmessage, and the ResumeCause value is set to the MO-RRCmessage; or
         II is related to the target RRC message, for example, an "XXConfigurationRequest message", and the ResumeCause value is set to the "XXConfigurationRequest message".
            the UE supports transmission in the first transmission manner;
            the network supports transmission in the first transmission manner, for example, the system message includes a corresponding indication;
            the UE has a valid configuration of the first transmission manner;
            the UE has a valid timing alignment timing alignment value;
            the UE has a stored nextHopChainingCount value, and the nextHopChainingCount value is provided by suspendConfig in a latest (previous) RRCRelease message; or
            a size of a MAC PDU including the target RRC message is less than or equal to a TBS defined in the configuration of the first transmission manner.
   In an implementation, by using an example in which transmission in a first transmission manner is PUR transmission, an initiation condition of PUR transmission is at least one of the following:
      the UE requests resumption of the RRC connection at the RRC layer;
      the UE supports PUR transmission;
      the network supports PUR transmission;
      the UE has a valid configuration of PUR transmission;
      the UE has a valid timing timing alignment value;
      the UE has a stored nextHopChainingCount value, and the nextHopChainingCount value is provided by suspendConfig in a latest RRCRelease message; or
      a size of a MAC PDU including the target RRC message is less than or equal to a TBS defined in a configuration of PUR transmission.
2) In an RRCResume process, the UE may set a ResumeCause value consistent with a value specifically selected above.
3) In the RRCResume process, the UE may perform at least any one of the following:
   (1) determining to skip performing UAC check, that is, access attempt being directly allowed;
   (2) performing UAC check by multiplexing a first Access category and/or Access identity(ies), for example, setting the Access category to 7, and setting the Access identity to 0 and the like; or
   (3) performing UAC check by using a set second Access category and Access identity(ies), which is at least any one of the following:
      not related to the target RRC message, that is, all target RRC messages are unified to a same value, for example, the Access category is uniformly set to 11, and the Access identity is uniformly set to 6; or
      related to the target RRC message, for example, for the "XXConfigurationRequest message", the Access category is set to 11, and the Access identity is set to 6.
4) In this stage, the RRC layer may be triggered to instruct the bottom layer to perform transmission in the first transmission manner and send an uplink grant corresponding to transmission in the first transmission manner to the bottom layer. A specific time point is at least one of the following:
   immediately triggering, after an initiation condition of transmission in the first transmission manner is met, the RRC layer to instruct the bottom layer to perform transmission in the first transmission manner and send the uplink grant corresponding to transmission in the first transmission manner to the bottom layer;
   triggering, before resumption of an SRB1 in a process of performing actions related to transmission of the RRCResumeRequest/RRCResumeRequest1 message (Actions related to transmission of RRCResumeRequest or RRCResumeRequest1 message), the RRC layer to instruct the bottom layer to perform transmission in the first transmission manner and send the uplink grant corresponding to transmission in the first transmission manner to the bottom layer;
   immediately triggering, after resumption of the SRB1 in the process of performing actions related to transmission of the RRCResumeRequest/RRCResumeRequest1 message, the RRC layer to instruct the bottom layer to perform transmission in the first transmission manner and send the uplink grant corresponding to transmission in the first transmission manner to the bottom layer; or
   immediately triggering, after submission of the RRCResumeRequest/RRCResumeRequest1 message to the bottom layer in the process of performing actions related to transmission of the RRCResumeRequest/RRCResumeRequest1 message, the RRC layer to instruct the bottom layer to perform transmission in the first transmission manner and send the uplink grant corresponding to transmission in the first transmission manner to the bottom layer.
   In an implementation, by using an example in which transmission in the first transmission manner is PUR transmission, the UE may perform at least one of the following:
      immediately triggering, after the initiation condition of PUR transmission is met, the RRC layer to instruct the bottom layer to perform PUR transmission and send an uplink grant corresponding to PUR transmission to the bottom layer;
      triggering, before resumption of an SRB1 in a process of performing actions related to transmission of the RRCResumeRequest/RRCResumeRequest1 message, the RRC layer to instruct the bottom layer to perform PUR transmission and send the uplink grant corresponding to PUR transmission to the bottom layer;
      triggering, after resumption of the SRB 1 in a process of performing actions related to transmission of the RRCResumeRequest/RRCResumeRequest1 message, the RRC layer to instruct the bottom layer to perform PUR transmission and send the uplink grant corresponding to PUR transmission to the bottom layer; or
      immediately triggering, after submission of the RRCResumeRequest/RRCResumeRequest1 message to the bottom layer in the process performing actions related to transmission of the RRCResumeRequest/RRCResumeRequest1 message, the RRC layer to instruct the bottom layer to perform PUR transmission and send the uplink grant corresponding to PUR transmission to the bottom layer.
5) A trigger time point at which the target RRC message is generated is at least any one of the following:
   (1) immediately triggering, by a UE RRC layer, generation of content of the target RRC message upon having a need to send the target RRC message to the network side device; or
   (2) upon having the need, by the UE RRC layer, to send the target RRC message to the network side device, first requesting, by the UE, RRC resumption and initiating transmission in the first transmission manner (for example, PUR transmission), triggering an RRC connection resume process, and triggering generation of the content of the target RRC message in the RRC connection resume process, which is at least any one of the following:
      triggering, by the UE, generation of the content of the target RRC message in an initiation stage of the RRC connection resume process;
      immediately triggering generation of the content of the target RRC message before resumption of an SRB1 in a "process of performing actions related to transmission of the RRCResumeRequest/RRCResumeRequest1 message";
      immediately triggering generation of the content of the target RRC message after resumption of the SRB1 in the "process of performing actions related to transmission of the RRCResumeRequest/RRCResumeRequest1 message"; or
      immediately triggering generation of the content of the target RRC message after submission of the RRCResumeRequest/RRCResumeRequest1 message to the bottom layer in the "process of performing actions related to transmission of the RRCResumeRequest/RRCResumeRequest1 message".
6) After the content of the target RRC message is generated, the UE may store the content of the target RRC message as any mathematical expression form such as a variable, an array, and/or a struct, or may determine to skip storage.
7) A trigger time point at which the target RRC message is submitted to the bottom layer is at least any one of the following:
   (1) immediately triggering submission of the target RRC message to the bottom layer after resumption of the SRB 1 in the "process of performing actions related to transmission of the RRCResumeRequest/RRCResumeRequest1 message"; or
   (2) immediately triggering submission of the target RRC message to the bottom layer after submission of the RRCResumeRequest/RRCResumeRequest1 message to the bottom layer in the "process of performing actions related to transmission of the RRCResumeRequest/RRCResumeRequest1 message".

### 2. Message sending stage

In such a stage, a MAC layer of the UE submits a MAC PDU carrying the RRCResumeRequest/RRCResumeRequest1 message and the target RRC message to a bottom layer (for example, a physical layer) and send the MAC PDU to the network side device.

Optionally, the target RRC message and an RRCResumeRequest/RRCResumeRequest1 message are multiplexed into a same MAC PDU and sent to the network side device, which includes at least any one of the following:
the RCResumeRequest/RRCResumeRequest1 message being before the target RRC message, where in other words, the RCResumeRequest/RRCResumeRequest1 message may be at the front of the MAC PDU, and the target RRC message is at the back of the MAC PDU; or
the RCResumeRequest/RRCResumeRequest1 message being after the target RRC message, where in other words, the target RRC message may be at the front of the MAC PDU, and the RRCResumeRequest/RRCResumeRequest1 message may be at the back of the MAC PDU.

Solution 3: The UE completes sending of the target RRC message through transmission in the second transmission manner (for example, transmission similar to SDT, transmission similar to EDT, and the like).

### 1. Preparation stage

Upon having a need to send an RRC message (a target RRC message) that requires activated AS security, an RRC layer of the UE may request resumption of an RRC connection and initiate transmission in a second transmission manner (for example, transmission similar to SDT, transmission similar to EDT, and the like), trigger an RRCResume process to generate an RRCResumeRequest/RRCResumeRequest1 message and send the RRCResumeRequest/RRCResumeRequest1 message to a bottom layer, trigger generation of content of the target RRC message, and trigger submission of the target RRC message to the bottom layer.
1) An initiation condition of transmission in the second transmission manner may be at least one of the following:
   the UE requests resumption of the RRC connection at the RRC layer, where a value of an RRCResumeCause is at least any one of the following:
   (1) multiplexing a first ResumeCause value, for example, mo-data, mo-signal, and the like; or
   (2) using a second ResumeCause value that is set, which is at least any one of the following:
      I is not related to the target RRC message, that is, all target RRC messages are unified, for example, a MO-RRCmessage, and the ResumeCause value is set to the MO-RRCmessage; or
      II is related to the target RRC message, for example, an "XXConfigurationRequest message", and the ResumeCause value is set to the "XXConfigurationRequest message".
         the UE supports transmission in the second transmission manner;
         the network supports transmission in the second transmission manner, for example, the system message includes a corresponding indication;
         the UE has a stored nextHopChainingCount value, and the nextHopChainingCount value is provided by suspendConfig in a latest (previous) RRCRelease message;
         all parameters related to transmission in the second transmission manner are configured in system information acquired by the UE; or
         a size of a MAC PDU including the target RRC message is less than or equal to a TBS defined in the configuration of the second transmission manner.

   In an implementation, by using an example in which transmission in the second transmission manner is EDT, an initiation condition of EDT is at least one of the following:
   the UE requests resumption of the RRC connection at the RRC layer;
   the UE supports EDT;
   the network supports EDT, for example, a system message includes a corresponding indication;
   the UE has a stored nextHopChainingCount value, and the nextHopChainingCount value is provided by suspendConfig in a latest (previous) RRCRelease message;
   all parameters related to EDT are configured in the system information acquired by the UE, for example, an edt-parameter; or
   a size of a MAC PDU including the target RRC message is less than or equal to a TBS, for example, an edt-TBS defined in a configuration of EDT.
2) In an RRCResume process, the UE may set a ResumeCause value consistent with a value specifically selected above.
3) In the RRCResume process, the UE may perform at least any one of the following:
   (1) determining to skip performing UAC check, that is, access attempt being directly allowed;
   (2) performing UAC check by multiplexing a first Access category and/or Access identity(ies), for example, setting the Access category to 7, and setting the Access identity to 0 and the like; or
   (3) performing UAC check by using a set second Access category and Access identity(ies), which is at least any one of the following:
      not related to the target RRC message, that is, all target RRC messages are unified to a same value, for example, the Access category is uniformly set to 11, and the Access identity is uniformly set to 6; or
      related to the target RRC message, for example, for the "XXConfigurationRequest message", the Access category is set to 11, and the Access identity is set to 6.
4) In this stage, a UE RRC layer may be triggered to configure the bottom layer to perform transmission in the second transmission manner. A specific time point is at least one of the following:
   immediately triggering, after an initiation condition of transmission in the second transmission manner is met, the RRC layer to configure the bottom layer to perform transmission in the second transmission manner;
   triggering, before resumption of an SRB1 in a process of performing actions related to transmission of the RRCResumeRequest/RRCResumeRequest1 message, the RRC layer to configure the bottom layer to perform transmission in the second transmission manner;
   immediately triggering, after resumption of the SRB1 in the process of performing actions related to transmission of the RRCResumeRequest/RRCResumeRequest1 message, the RRC layer to configure the bottom layer to perform transmission in the second transmission manner; or
   immediately triggering, after submission of the RRCResumeRequest/RRCResumeRequest1 message to the bottom layer in the process of performing actions related to transmission of the RRCResumeRequest/RRCResumeRequest1 message, the RRC layer to configure the bottom layer to perform transmission in the second transmission manner.

   In an implementation, by using an example in which transmission in the second transmission manner is EDT, the UE may perform at least one of the following:
   immediately triggering, after the initiation condition of EDT is met, the RRC layer to configure the bottom layer to perform EDT;
   triggering, before resumption of an SRB1 in a process of performing actions related to transmission of the RRCResumeRequest/RRCResumeRequest1 message, the RRC layer to configure the bottom layer to perform EDT;
   triggering, after resumption of the SRB 1 in the process of performing actions related to transmission of the RRCResumeRequest/RRCResumeRequest1 message, the RRC layer to configure the bottom layer to perform EDT; or
   immediately triggering, after submission of the RRCResumeRequest/RRCResumeRequest1 message to the bottom layer in the process of performing actions related to transmission of the RRCResumeRequest/RRCResumeRequest1 message, the RRC layer to configure the bottom layer to perform EDT.
5) A trigger time point at which the target RRC message is generated is at least any one of the following:
   (1) immediately triggering, by a UE RRC layer, generation of content of the target RRC message upon having a need to send the target RRC message to the network side device; or
   (2) upon having a need, by the UE RRC layer, to send the target RRC message to the network side device, first requesting, by the UE, RRC resumption and initiating transmission in the second transmission manner (for example, transmission similar to SDT, transmission similar to EDT, and the like), triggering an RRC connection resume process, and triggering generation of the content of the target RRC message in the RRC connection resume process, which is at least any one of the following:
      triggering, by the UE, generation of the content of the target RRC message in an initiation stage of the RRC connection resume process;
      immediately triggering generation of the content of the target RRC message before resumption of an SRB1 in a "process of performing actions related to transmission of the RRCResumeRequest/RRCResumeRequest1 message";
      immediately triggering generation of the content of the target RRC message after resumption of the SRB1 in the "process of performing actions related to transmission of the RRCResumeRequest/RRCResumeRequest1 message"; or
      immediately triggering generation of the content of the target RRC message after submission of the RRCResumeRequest/RRCResumeRequest1 message to the bottom layer in the "process of performing actions related to transmission of the RRCResumeRequest/RRCResumeRequest1 message".
6) After the content of the target RRC message is generated, the UE may store the content of the target RRC message as any mathematical expression form such as a variable, an array, and/or a struct, or may determine to skip storage.
7) A trigger time point at which the target RRC message is submitted to the bottom layer is at least any one of the following:
   (1) immediately triggering submission of the target RRC message to the bottom layer after resumption of the SRB 1 in the "process of performing actions related to transmission of the RRCResumeRequest/RRCResumeRequest1 message"; or
   (2) immediately triggering submission of the target RRC message to the bottom layer after submission of the RRCResumeRequest/RRCResumeRequest1 message to the bottom layer in the "process of performing actions related to transmission of the RRCResumeRequest/RRCResumeRequest1 message".

### 2. Message sending stage

In such a stage, a MAC layer of the UE submits a MAC PDU carrying the RRCResumeRequest/RRCResumeRequest1 message and the target RRC message to a bottom layer (for example, a physical layer) and send the MAC PDU to the network side device.

Optionally, the target RRC message and an RRCResumeRequest/RRCResumeRequest1 message are multiplexed into a same MAC PDU and sent to the network side device, which includes at least any one of the following:
the RCResumeRequest/RRCResumeRequest1 message being before the target RRC message, where in other words, the RCResumeRequest/RRCResumeRequest1 message may be at the front of the MAC PDU, and the target RRC message is at the back of the MAC PDU; or
the RCResumeRequest/RRCResumeRequest1 message being after the target RRC message, where in other words, the target RRC message may be at the front of the MAC PDU, and the RRCResumeRequest/RRCResumeRequest1 message may be at the back of the MAC PDU.

This application is described in detail below with reference to specific embodiments.

### Embodiment 1

In Embodiment 1, the target RRC message is an MBSCountingResponse message, and the target RRC message is sent through a random access process.

As shown in FIG. 3, a corresponding process of sending the target RRC message may include:
Step 30: Preparation stage.

After an RRC layer of the UE receives an MBSCountingRequest message, the UE may have a need to send an MBSCountingResponse message to the network side device in a case that the UE is receiving and is interested in an MBS indicated in the MBSCountingRequest message. The UE may trigger an RRCResume process to generate an RRCResumeRequest/RRCResumeRequest1 message and submit the RRCResumeRequest/RRCResumeRequest1 message to the bottom layer, and generate an MBSCountingResponse message and submit the MBSCountingResponse message to the bottom layer.

UAC-related settings: setting an Access category to 11, setting an Access identity to 0, performing UAC check and passes the UAC check, that is, access attempt being allowed.

Setting of a ResumeCause value: setting an RRCResumeCause to MO-RRCmessage.

Generation of the RRCResumeRequest/RRCResumeRequest1 message and submission of the message to the bottom layer: For example, the RRC layer of the UE generates an RRCResumeRequest/RRCResumeRequest1 message with a ResumeCause value of MO-RRCmessage, and send the RRCResumeRequest/RRCResumeRequest1 message to the bottom layer.

Generation of the MBSCountingResponse message and submission of the message to the bottom layer: For example, after the RRCResumeRequest/RRCResumeRequest1 message is submitted to the bottom layer, generation of the MBSCountingResponse message and submission of the message to the bottom layer are immediately triggered.

Step 31: A MAC layer of the UE initiates a random access process and sends a Msg1, that is, a random access preamble to a base station gNB.

Step 32: The gNB returns a Msg2, that is, random access response (RAR) to the UE.

Step 33: The MAC layer of the UE sends a MAC PDU including both the RRCResumeRequest/RRCResumeRequest1 message and the MBSCountingResponse message to the gNB through a Msg3.

Step 34: The gNB returns a Msg4 to the UE, where the message includes an RRCRelease message.

### Embodiment 2

In embodiment 2, the target RRC message is a PURConfigurationRequest message, and the target RRC message is sent through PUR transmission.

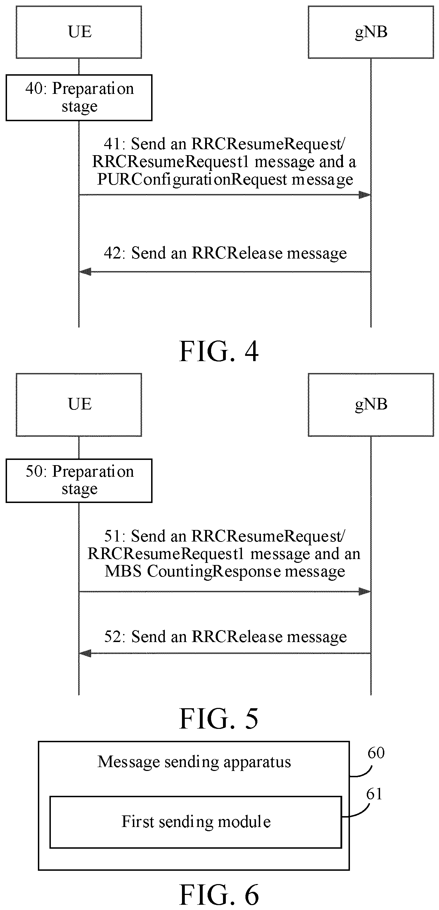

As shown in FIG. 4, a corresponding process of sending the target RRC message may include:
Step 40: Preparation stage.

The UE has valid PUR resources. The UE may have a need to send the PURConfigurationRequest message to the network side device in a case that the UE is no longer interested in a configuration of PUR. The RRC layer of the UE may request RRC resumption and initiate PUR transmission, and trigger an RRCResume process to generate an RRCResumeRequest/RRCResumeRequest1 message and send the RRCResumeRequest/RRCResumeRequest1 message to the bottom layer, and generate a PURConfigurationRequest message and submit the PURConfigurationRequest message to the bottom layer.

UAC-related settings: the same as Mo-data, setting an Access category to 7, setting an Access identity to 0, performing UAC check and passes the UAC check, that is, access attempt being allowed.

Setting of a ResumeCause value: the same as Mo-data, setting an RRCResumeCause value to MO-data.

Generation of the RRCResumeRequest/RRCResumeRequest1 message and submission of the message to the bottom layer: For example, the RRC layer of the UE generates an RRCResumeRequest/RRCResumeRequest1 message with a ResumeCause value of MO-data, and send the RRCResumeRequest/RRCResumeRequest1 message to the bottom layer.

Generation of the PURConfigurationRequest message and submission of the message to the bottom layer: For example, after the RRCResumeRequest/RRCResumeRequest1 message is submitted to the bottom layer, generation of the PURConfigurationRequest message and submission of the message to the bottom layer are immediately triggered.

Step 41: The UE sends the RRCResumeRequest/RRCResumeRequest1 message and the PURConfigurationRequest message to the gNB.

Optionally, the MAC layer of the UE performs PUR transmission, submits a MAC PDU including both the RRCResumeRequest/RRCResumeRequest1 message and the PURConfigurationRequest message to a physical layer, and send the MAC PDU to the gNB.

Step 42: The gNB an RRCRelease message to the UE.

### Embodiment 3

In Embodiment 3, the target RRC message is an MBSCountingResponse message, and the target RRC message is sent through EDT.

As shown in FIG. 5, a corresponding process of sending the target RRC message may include:
Step 50: Preparation stage.

After an RRC layer of the UE receives an MBSCountingRequest message, the UE may have a need to send an MBSCountingResponse message to the network side device in a case that the UE is receiving and is interested in an MBS indicated in the MBSCountingRequest message. The RRC layer of the UE may request RRC resumption and initiate EDT transmission, and trigger an RRCResume process to generate an RRCResumeRequest/RRCResumeRequest1 message and send the RRCResumeRequest/RRCResumeRequest1 message to the bottom layer, and generate a PURConfigurationRequest message and submit the PURConfigurationRequest message to the bottom layer.

UAC-related settings: setting an Access category to 11, setting an Access identity to 0, performing UAC check and passes the UAC check, that is, access attempt being allowed.

Setting of a ResumeCause value: setting an RRCResumeCause to MO-RRCmessage.

Generation of the RRCResumeRequest/RRCResumeRequest1 message and submission of the message to the bottom layer: For example, the RRC layer of the UE generates an RRCResumeRequest/RRCResumeRequest1 message with a ResumeCause value of MO-RRCmessage, and send the RRCResumeRequest/RRCResumeRequest1 message to the bottom layer.

Generation of the MBSCountingResponse message and submission of the message to the bottom layer: For example, after the RRCResumeRequest/RRCResumeRequest1 message is submitted to the bottom layer, generation of the MBSCountingResponse message and submission of the message to the bottom layer are immediately triggered.

Step 51: The UE sends the RRCResumeRequest/RRCResumeRequest1 message and the MBSCountingResponse message to the gNB.

Optionally, the MAC layer of the UE performs EDT, submits a MAC PDU including both the RRCResumeRequest/RRCResumeRequest1 message and the MBSCountingResponse message to a physical layer, and sends the message to the gNB.

Step 52: The gNB an RRCRelease message to the UE.

It is to be noted that, an execution entity of the message sending method provided in the embodiments of this application may be a message sending apparatus, or may be a control module in the message sending apparatus for performing the message sending method. The message sending apparatus provided in the embodiments of this application is described in the embodiments of this application by using an example in which the message sending apparatus performs the message sending method.

Referring to FIG. 6, FIG. 6 is a schematic structural diagram of a message sending apparatus according to an embodiment of this application. The apparatus is applied to a terminal. As shown in FIG. 6, the message sending apparatus 60 includes:
a first sending module 61, configured to send a target RRC message in a non-RRC connected state in a case that the terminal is in the non-RRC connected state and has a need to send the target RRC message to a network side device, where the target RRC message is an RRC message that requires activated access stratum security.

Optionally, the message sending apparatus 60 further includes:
a first execution module, configured to perform at least one of the following:
triggering an RRC connection resume process to generate an RRCResumeRequest/RRCResumeRequest1 message and submit the RRCResumeRequest/RRCResumeRequest1 message to a bottom layer; or
triggering generation of content of the target RRC message, and triggering submission of the target RRC message to the bottom layer.

Optionally, the message sending apparatus 60 further includes:
a setting module, configured to set a ResumeCause value, where
the resumeCause value is at least one of the following:
   a multiplexed first ResumeCause value; or
   a second ResumeCause value, where the second ResumeCause value is not related to the target RRC message, or the second ResumeCause value is related to the target RRC message.

Optionally, the message sending apparatus 60 further includes:
a second execution module, configured to perform at least one of the following:
determining to skip performing unified access control UAC check;
performing UAC check by using a set first access category and/or access identity(ies); or
performing UAC check by using a set second access category and/or access identity(ies), where the second access category and/or access identity(ies) are(is) not related to the target RRC message, or the second access category and/or access identity(ies) are(is) related to the target RRC message.

Optionally, the first execution module is further configured to perform at least one of the following:
immediately triggering generation of the content of the target RRC message in a case that the terminal has the need to send the target RRC message to the network side device; or
triggering generation of the content of the target RRC message in the RRC connection resume process.

Optionally, the first execution module is further configured to perform at least one of the following:
triggering generation of the content of the target RRC message in an initiation stage of the RRC connection resume process;
triggering generation of the content of the target RRC message before resumption of a signaling radio bearer SRB1 in a process of performing actions related to transmission of the RRCResumeRequest/RRCResumeRequest1 message;
immediately triggering generation of the content of the target RRC message after resumption of the SRB1 in the process of performing actions related to transmission of the RRCResumeRequest/RRCResumeRequest1 message; or
immediately triggering generation of the content of the target RRC message after submission of the RRCResumeRequest/RRCResumeRequest1 message to the bottom layer in the process of performing actions related to transmission of the RRCResumeRequest/RRCResumeRequest1 message.

Optionally, the first execution module is further configured to perform at least one of the following:
immediately triggering submission of the target RRC message to the bottom layer after resumption of an SRB1 in a process of performing actions related to transmission of the RRCResumeRequest/RRCResumeRequest1 message; or
immediately triggering submission of the target RRC message to the bottom layer after submission of the RRCResumeRequest/RRCResumeRequest1 message to the bottom layer in the process of performing actions related to transmission of the RRCResumeRequest/RRCResumeRequest1 message.

Optionally, the message sending apparatus 60 further includes:
a storage module, configured to store, after the content in the target RRC message is generated, the content in the target RRC message in a first form, or determine to skip storing the content in the target RRC message.

Optionally, the first form includes at least one of the following:
a variable, an array, or a struct.

Optionally, the first sending module 61 is specifically configured to:
multiplex the target RRC message and the RRCResumeRequest/RRCResumeRequest1 message into a same MAC PDU and sending the MAC PDU to the network side device.

Optionally, the MAC PDU includes at least one of the following:
the RRCResumeRequest/RRCResumeRequest1 message is before the target RRC message; or
the RRCResumeRequest/RRCResumeRequest1 message is after the target RRC message.

Optionally, the first execution module is further configured to:
initiate a random access process at a MAC layer.

Optionally, a trigger event of the random access process is at least one of the following:
a multiplexed first trigger event; or
a second trigger event, where the second trigger event is not related to the target RRC message, or the second trigger event is related to the target RRC message.

Optionally, a configuration of resources and parameters in the random access process is at least one of the following:
completely performing configuration in a separate manner;
completely multiplexing a first configuration; or
partially multiplexing the first configuration and partially performing configuration in a separate manner.

Optionally, the first execution module is further configured to:
request resumption of an RRC connection at an RRC layer, and initiating transmission in a first transmission manner; and
perform transmission in the first transmission manner at a MAC layer.

Optionally, an initiation condition of transmission in the first transmission manner is at least one of the following:
resumption of the RRC connection is requested at the RRC layer;
the terminal supports transmission in the first transmission manner;
a network supports transmission in the first transmission manner,
the terminal has a valid configuration of the first transmission manner;
the terminal has a valid timing alignment value;
the terminal has a stored nextHopChainingCount value, and the nextHopChainingCount value is provided by suspendConfig in a latest RRC release message; or
a size of the MAC PDU including the target RRC message is less than or equal to a transport block size TBS defined in the configuration of the first transmission manner.

Optionally, the first execution module is further configured to:
trigger the RRC layer to instruct the bottom layer to perform transmission in the first transmission manner and send an uplink grant corresponding to transmission in the first transmission manner to the bottom layer.

Optionally, the first execution module is further configured to perform at least one of the following:
immediately triggering, after an initiation condition of transmission in the first transmission manner is met, the RRC layer to instruct the bottom layer to perform transmission in the first transmission manner and send the uplink grant corresponding to transmission in the first transmission manner to the bottom layer;
triggering, before resumption of an SRB1 in a process of performing actions related to transmission of the RRCResumeRequest/RRCResumeRequest1 message, the RRC layer to instruct the bottom layer to perform transmission in the first transmission manner and send the uplink grant corresponding to transmission in the first transmission manner to the bottom layer;
immediately triggering, after resumption of the SRB 1 in the process of performing actions related to transmission of the RRCResumeRequest/RRCResumeRequest1 message, the RRC layer to instruct the bottom layer to perform transmission in the first transmission manner and send the uplink grant corresponding to transmission in the first transmission manner to the bottom layer; or
immediately triggering, after submission of the RRCResumeRequest/RRCResumeRequest1 message to the bottom layer in the process of performing actions related to transmission of the RRCResumeRequest/RRCResumeRequest1 message, the RRC layer to instruct the bottom layer to perform transmission in the first transmission manner and send the uplink grant corresponding to transmission in the first transmission manner to the bottom layer.

Optionally, the first execution module is further configured to:
request resumption of an RRC connection at an RRC layer, and initiating transmission in a second transmission manner; and
perform transmission in the second transmission manner at a MAC layer.

Optionally, an initiation condition of transmission in the second transmission manner is at least one of the following:
resumption of the RRC connection is requested at the RRC layer;
the terminal supports transmission in the second transmission manner;
a network supports transmission in the second transmission manner;
the terminal has a stored nextHopChainingCount value, and the nextHopChainingCount value is provided by suspendConfig in a latest RRC release message;
all parameters related to transmission in the second transmission manner are configured in system information acquired by the terminal; or
a size of the MAC PDU including the target RRC message is less than or equal to a transport block size TBS defined in a configuration of transmission of the second transmission manner.

Optionally, the first execution module is further configured to:
trigger the RRC layer to configure the bottom layer to perform transmission in the second transmission manner, which is at least one of the following:
immediately triggering, after an initiation condition of transmission in the second transmission manner is met, the RRC layer to configure the bottom layer to perform transmission in the second transmission manner;
triggering, before resumption of an SRB1 in a process of performing actions related to transmission of the RRCResumeRequest/RRCResumeRequest1 message, the RRC layer to configure the bottom layer to perform transmission in the second transmission manner;
immediately triggering, after resumption of the SRB 1 in the process of performing actions related to transmission of the RRCResumeRequest/RRCResumeRequest1 message, the RRC layer to configure the bottom layer to perform transmission in the second transmission manner; or
immediately triggering, after submission of the RRCResumeRequest/RRCResumeRequest1 message to the bottom layer in the process of performing actions related to transmission of the RRCResumeRequest/RRCResumeRequest1 message, the RRC layer to configure the bottom layer to perform transmission in the second transmission manner.

Optionally, when the target RRC message is an RRC message related to a configuration of a first transmission manner, the terminal has the need to send the target RRC message to the network side device in a case that at least one of the following is met:
the terminal supports transmission in the first transmission manner;
a network supports transmission in the first transmission manner;
a size of a MAC PDU including the target RRC message is less than or equal to a maximum transport block size TBS supported by the terminal that is defined based on a terminal category; or
the terminal meets at least one of the following: the terminal is interested in the configuration of the first transmission manner, the terminal is no longer interested in the configuration of the first transmission manner, or the terminal needs to update the configuration of the first transmission manner.

Optionally, when the target RRC message is an RRC message related to multi-cast broadcast service MBS counting, the terminal has the need to send the target RRC message to the network side device in a case that at least one of the following is met:
the terminal has an MBS capability;
a network supports an MBS,
a size of a MAC PDU including the target RRC message is less than or equal to a maximum TBS supported by the terminal that is defined based on a terminal category;
an RRC layer of the terminal receives a control message related to MBS counting that is sent by the network side device; or
the terminal is receiving or is interested in receiving at least one MBS indicated in the control message related to MBS counting.

Optionally, when the target RRC message is an RRC message related to an MBS interest indication, the terminal has the need to send the target RRC message to the network side device in a case that at least one of the following is met:
the terminal has an MBS capability;
a network supports an MBS;
a size of a MAC PDU including the target RRC message is less than or equal to a maximum TBS supported by the terminal that is defined based on a terminal category;
the terminal receives control information related to the MBS that is sent by the network side device;
the terminal enters or leaves a service area;
an MBS session starts or stops;
content of an MBS interest indication message changes; or
a cell or a base station that sends the control information related to the MBS changes.

The message sending apparatus in the embodiments of this application may be an apparatus, or may be a component, an integrated circuit, or a chip in the terminal. The apparatus may be a mobile terminal or may be a non-mobile terminal. Exemplarily, the mobile terminal may include but is not limited to a type of the terminal 11 listed above, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The message sending apparatus in the embodiments of this application may be an apparatus having an operating system. The operating system may be an Android (Android) operating system, may be an ios operating system, or may be another possible operating system, and is not specifically limited in the embodiments of this application.

The message sending apparatus 60 provided in the embodiments of this application can implement the processes implemented in the method embodiment of FIG. 2 and achieve the same technical effect. To avoid repetition, details are not described herein again.

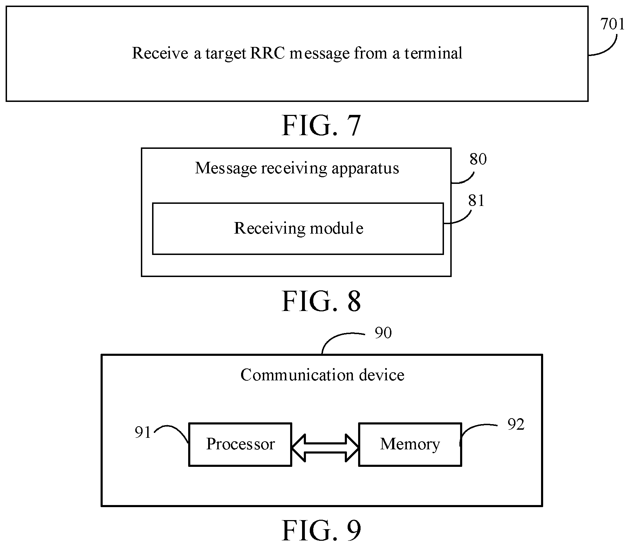

Referring to FIG. 7, FIG. 7 is a flowchart of a message receiving method according to an embodiment of the present invention. The method is applied to a network side device. As shown in FIG. 7, the method includes the following steps:
Step 701: Receive a target RRC message from a terminal.

The target RRC message is an RRC message that requires activated access stratum security; and the target RRC message is sent in a non-RRC connected state in a case that the terminal is in the non-RRC connected state and has a need to send the target RRC message.

In this embodiment, the target RRC message directly sent by the terminal in the non-RRC connected state may be received, and the terminal does not necessarily send the target RRC message only after other connections of triggering establishment or resumption of the RRC connection are met and the RRC connection is successfully established or resumed, thereby reducing a delay. Further, resource waste and energy consumption may also be avoided.

Optionally, the process of receiving a target RRC message from a terminal may include:
receiving the target RRC message from the terminal through a MAC PDU, where the target RRC message and the RRCResumeRequest/RRCResumeRequest1 message are multiplexed in the MAC PDU.

Optionally, in a case that the target RRC message is an RRC message related to a configuration of transmission in a first transmission manner, the method further includes:
sending indication information indicating that a network supports transmission in the first transmission manner to the terminal.

Optionally, in a case that the target RRC message is an RRC message related to MBS counting, the method further includes at least one of the following:
sending indication information indicating that a network supports an MBS to the terminal; or
sending a control message related to MBS counting to the terminal.

Optionally, in a case that the target RRC message is an RRC message related to an MBS interest indication, the method further includes at least one of the following:
sending indication information indicating that a network supports an MBS to the terminal, for example, the indication information may be sent through system information; or
sending control information related to the MBS to the terminal, for example, the control information may be sent through the system message or dedicated RRC signaling.

It is to be noted that, an execution entity of the message receiving method provided in the embodiments of this application may be a message receiving apparatus, or may be a control module in the message receiving apparatus for performing the message receiving method. The message receiving apparatus provided in the embodiments of this application is described in the embodiments of this application by using an example in which the message receiving apparatus performs the message receiving method.

Referring to FIG. 8, FIG. 8 is a schematic structural diagram of a message receiving apparatus according to an embodiment of this application. The apparatus is applied to a network side device. As shown in FIG. 8, the message receiving apparatus 80 includes:
a receiving module 81, configured to receive a target RRC message from a terminal, where
the target RRC message is an RRC message that requires activated access stratum security; and the target RRC message is sent in a non-RRC connected state in a case that the terminal is in the non-RRC connected state and has a need to send the target RRC message.

Optionally, the receiving module 81 is further configured to: receive the target RRC message from the terminal through a MAC PDU, where the target RRC message and an RRCResumeRequest/RRCResumeRequest1 message are multiplexed in the MAC PDU.

Optionally, the message receiving apparatus 80 further includes:
a second sending module, configured to: send indication information indicating that a network supports transmission in a first transmission manner to the terminal in a case that the target RRC message is an RRC message related to a configuration of transmission in the first transmission manner; or
in a case that the target RRC message is an RRC message related to MBS counting, send indication information indicating that the network supports an MBS to the terminal, and/or send a control message related to MBS counting to the terminal; or
in a case that the target RRC message is an RRC message related to an MBS interest indication, send indication information indicating that the network supports an MBS to the terminal, and/or send control information related to the MBS to the terminal.

The message receiving apparatus 80 provided in the embodiments of this application can implement the processes implemented in the method embodiment of FIG. 7 and achieve the same technical effect. To avoid repetition, details are not described herein again.

Optionally, as shown in FIG. 9, an embodiment of this application further provides a communication device 90, including a processor 91, a memory 92, and a program or instructions stored in the memory 92 and executable on the processor 91. For example, in a case that the communication device 90 is a terminal, the program or instructions is executed by the processor 91 to implement the processes of the embodiments of the message sending method, and the same technical effects can be achieved. In a case that the communication device 90 is a network side device, the program or instructions is executed by the processor 91 to implement the processes of the embodiments of the message receiving method, and the same technical effects can be achieved. To avoid repetition, details are not described herein again.

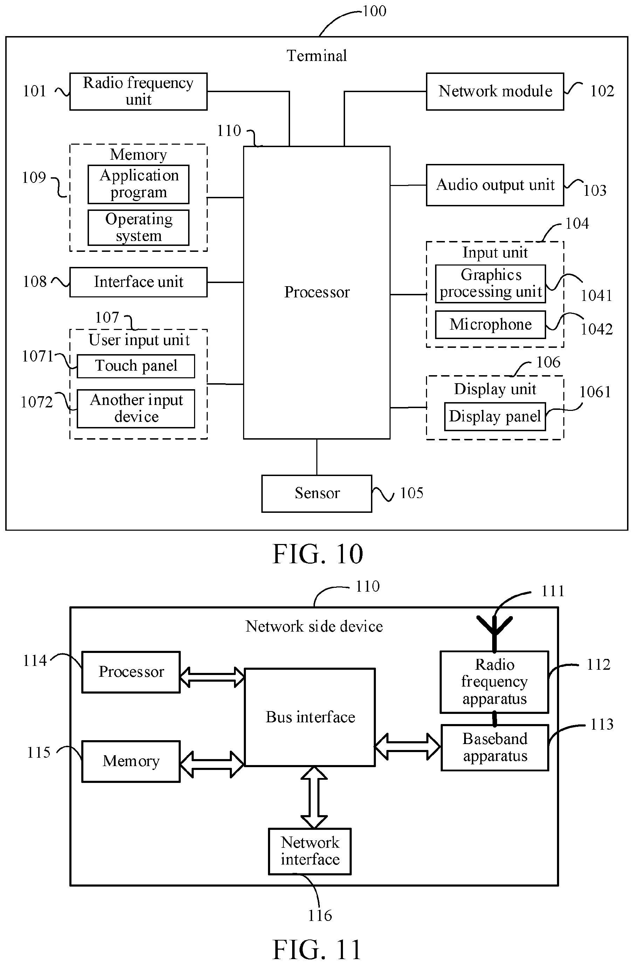

FIG. 10 is a schematic diagram of a hardware structure of a terminal according to an embodiment of this application.

The terminal 100 includes, but is not limited to, components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that, the terminal 100 may further include a power supply (such as a battery) for supplying power to the components. Preferably, the power supply may be logically connected to the processor 110 by using a power management system, thereby implementing functions such as charging, discharging, and power consumption management by using the power management system. A terminal structure shown in FIG. 10 does not constitute a limitation to the terminal, and the terminal may include more or fewer components than those shown in the figure, or some components may be combined, or a different component deployment may be used. Details are not described herein again.

It may be understood that, in the embodiments of this application, the input unit 104 may include a graphics processing unit (Graphics Processing Unit, GPU) 1041 and a microphone 1042. The graphics processing unit 1041 processes image data of a static picture or a video obtained by an image capturing apparatus (for example, a camera) in a video capturing mode or an image capturing mode. The display unit 106 may include a display panel 1061, for example, a display panel 1061 configured in a form such as a liquid crystal display or an organic light-emitting diode. The user input unit 107 includes a touch panel 1071 and another input device 1072. The touch panel 1071 is also referred to as a touchscreen. The touch panel 1071 may include two parts: a touch detection apparatus and a touch controller. the another input device 1072 may include, but is not limited to, a physical keyboard, a functional key (such as a volume control key or a switch key), a track ball, a mouse, and a joystick, and the details will not be described herein again.

In this embodiment of this application, the radio frequency unit 101 receives downlink data from a network side device and sends the data to the processor 110 for processing; and sends uplink data to the network side device. Generally, the radio frequency unit 101 includes, but is not limited to, an antenna, at least one amplifier, a transceiver, a coupler, a low noise amplifier, a duplexer, and the like.

The memory 109 may be configured to store a software program or instructions and various data. The memory 109 may mainly include a program storage or instruction area and a data storage area. The program storage or instruction area may store an operating system, an application program or instructions required by at least one function (for example, a sound playback function and an image playback function), or the like. In addition, the memory 109 may include a high speed RAM, and may further include a non-volatile memory. The non-volatile memory may be a read-only memory (read-only memory, ROM), a programmable ROM (programmable ROM, PROM), an erasable programmable read-only memory (erasable PROM, EPROM), an electrically EPROM (electrically EPROM, EEPROM), or a flash memory. For example, at least one magnetic disk storage device, a flash memory device, or another non-volatile solid-state storage device.

The processor 110 may include one or more processing units. Optionally, the processor 110 may integrate an application processor and a modem processor. The application processor mainly processes an operating system, a user interface, an application program or instructions, and the like. The modem processor mainly processes wireless communication, for example, a baseband processor. It may be understood that the foregoing modem processor may not be integrated into the processor 110.

The radio frequency unit 101 is configured to send a target RRC message in a non-RRC connected state in a case that a terminal 100 is in the non-RRC connected state and has a need to send the target RRC message to a network side device, the target RRC message being an RRC message that requires activated access stratum security.

The terminal 100 provided in the embodiments of this application can implement the processes implemented in the method embodiment of FIG. 2 and achieve the same technical effect. To avoid repetition, details are not described herein again.

Specifically, an embodiment of this application further provides a network side device. As shown in FIG. 11, the network side device 110 includes an antenna 111, a radio frequency apparatus 112, and a baseband apparatus 113. The antenna 111 is connected to the radio frequency apparatus 112. In an uplink direction, the radio frequency apparatus 112 receives information by using the antenna 111, and sends the received information to the baseband apparatus 113 for processing. In a downlink direction, the baseband apparatus 113 processes to-be-processed information, and sends the information to the radio frequency apparatus 112. The radio frequency apparatus 112 processes received information and sends the information by using the antenna 111.

The frequency band processing apparatus may be located in the baseband apparatus 113, and the method performed by the network side device in the foregoing embodiments may be implemented in the baseband apparatus 113. The baseband apparatus 113 includes a processor 114 and a memory 115.

The baseband apparatus 113 may include, for example, at least one baseband plate. A plurality of chips are arranged on the baseband plate. As shown in FIG. 11, one of the plurality of chips is, for example, the processor 114, and is connected to the memory 115, to invoke a program in the memory 115 to perform operations performed by the network side device in the foregoing method embodiment.

The baseband apparatus 113 may further include a network interface 116, configured to exchange information with the radio frequency apparatus 112. The interface is, for example, a common public radio interface (common public radio interface, CPRI).

Specifically, the network side device in this embodiment of the present invention further includes: instructions or a program stored in the memory 115 and executable on the processor 114, and the processor 114 invokes the instructions or program in the memory 115 to perform the method performed by the modules shown in FIG. 8, and can achieve the same technical effect. To avoid repetition, details are not described herein again.

An embodiment of this application further provides a readable storage medium, storing a program or instructions, the program or instructions, when executed by a processor, implementing the processes of the embodiments of the message sending method or processes of the embodiments of the message receiving method, and achieving the same technical effect. To avoid repetition, details are not described herein again.

The readable storage medium includes a computer-readable storage medium, for example, a read-only memory (Read-Only Memory, ROM), a random access memory (Random Access Memory, RAM), a magnetic disk, an optical disk, or the like.

An embodiment of this application further provides a chip, including a processor and a communication interface coupled to each other, the processor being configured to run a program or instructions to implement the processes of the embodiments of the message sending method or the processes of the embodiments of the message receiving method, and can achieve the same technical effects. To avoid repetition, details are not described herein again.

It should be understood that, the chip mentioned in this embodiment of this application may also be referred to as a system-level chip, a system chip, a chip system, a system on chip, or the like.

It is to be noted that, the term "include", "comprise", or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Unless otherwise specified, elements defined by the sentence "including one" does not exclude that there are still other same elements in the processes, methods, objects, or apparatuses. In addition, it is to be noted that, the scope of the method and the apparatus in the embodiments of this application is not limited to executing functions in an order shown or discussed, and may also include executing the functions in a substantially simultaneous manner or in a reverse order according to involved functions. For example, the described method may be performed in an order different from that described order, and various steps may also be added, omitted, or combined. In addition, features described with reference to some examples may also be combined in other examples.

According to the descriptions of the foregoing embodiments, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions of this application or the part that makes contributions to the related art may be substantially embodied in the form of a software product. The computer software product is stored in a storage medium (for example, a read-only memory (ROM)/random access memory (RAM), a magnetic disk, or an optical disc), and contains several instructions for instructing a terminal (which may be a mobile phone, a computer, a server, an air conditioner, or a network side device) to perform the method described in the embodiments of this application.

The embodiments of this application are described above with reference to the accompanying drawings. However, this application is not limited to the foregoing specific implementations. The foregoing specific implementations are merely illustrative rather than limitative. A person of ordinary skill in the art may derive various forms from this application without departing from the spirit of this application and the scope claimed by the claims, which are all under the protection of this application.

## Claims

1. A message sending method, applied to a terminal, the method comprising:
sending a target RRC message in a non-radio resource control RRC connected state in a case that the terminal is in the non-RRC connected state and has a need to send the target RRC message to a network side device, wherein
the target RRC message is an RRC message that requires activated access stratum security.

2. The method according to claim 1, wherein before the sending a target RRC message, the method further comprises:
triggering an RRC connection resume process to generate either an RRCResumeRequest or an RRCResumeRequest1 message and submit either the RRCResumeRequest or the RRCResumeRequest1 message to a bottom layer; and
triggering generation of content of the target RRC message, and triggering submission of the target RRC message to the bottom layer.

3. The method according to claim 2, wherein in the RRC connection resume process, the method further comprises:
setting a resume cause ResumeCause value, wherein
the resumeCause value is at least one of the following:
a multiplexed first ResumeCause value; or
a second ResumeCause value, wherein the second ResumeCause value is not related to the target RRC message, or the second ResumeCause value is related to the target RRC message.

4. The method according to claim 2, wherein in the RRC connection resume process, the method further comprises at least one of the following:
determining to skip performing unified access control UAC check;
performing UAC check by using a set first access category and/or access identity(ies); or
performing UAC check by using a set second access category and/or access identity(ies), wherein the second access category and/or access identity(ies) are(is) not related to the target RRC message, or the second access category and/or access identity(ies) are(is) related to the target RRC message.

5. The method according to claim 2, wherein the triggering generation of content of the target RRC message comprises at least one of the following:
immediately triggering generation of the content of the target RRC message in a case that the terminal has the need to send the target RRC message to the network side device; or
triggering generation of the content of the target RRC message in the RRC connection resume process.

6. The method according to claim 5, wherein the triggering generation of the content of the target RRC message in the RRC connection resume process comprises at least one of the following:
triggering generation of the content of the target RRC message in an initiation stage of the RRC connection resume process;
triggering generation of the content of the target RRC message before resumption of a signaling radio bearer SRB1 in a process of performing actions related to transmission of either the RRCResumeRequest or the RRCResumeRequest1 message;
immediately triggering generation of the content of the target RRC message after resumption of the SRB 1 in the process of performing actions related to transmission of either the RRCResumeRequest or the RRCResumeRequest1 message; or
immediately triggering generation of the content of the target RRC message after submission of either the RRCResumeRequest or the RRCResumeRequest1 message to the bottom layer in the process of performing actions related to transmission of either the RRCResumeRequest or the RRCResumeRequest1 message.

7. The method according to claim 2, wherein the triggering submission of the target RRC message to the bottom layer comprises at least one of the following:
immediately triggering submission of the target RRC message to the bottom layer after resumption of an SRB1 in a process of performing actions related to transmission of either the RRCResumeRequest or the RRCResumeRequest1 message; or
immediately triggering submission of the target RRC message to the bottom layer after submission of either the RRCResumeRequest or the RRCResumeRequest1 message to the bottom layer in the process of performing actions related to transmission of either the RRCResumeRequest or the RRCResumeRequest1 message.

8. The method according to claim 2, further comprising:
after the content in the target RRC message is generated, storing the content in the target RRC message in a first form, or determining to skip storing the content in the target RRC message.

9. The method according to claim 8, wherein the first form comprises at least one of the following:
a variable, an array, or a struct.

10. The method according to claim 2, wherein the sending a target RRC message comprises:
multiplexing the target RRC message and either the RRCResumeRequest or the RRCResumeRequest1 message into a same Media Access Control PROTOCOL DATA UNIT MAC PDU and sending the MAC PDU to the network side device.

11. The method according to claim 10, wherein the MAC PDU comprises at least one of the following:
either the RRCResumeRequest or the RRCResumeRequest1 message is before the target RRC message; or
either the RRCResumeRequest or the RRCResumeRequest1 message is after the target RRC message.

12. The method according to claim 2 or 10, wherein before the sending a target RRC message, the method further comprises:
initiating a random access process at a MAC layer.

13. The method according to claim 12, wherein a trigger event of the random access process is at least one of the following:
a multiplexed first trigger event; or
a second trigger event, wherein the second trigger event is not related to the target RRC message, or the second trigger event is related to the target RRC message.

14. The method according to claim 12, wherein a configuration of resources and parameters in the random access process is at least one of the following:
completely performing configuration in a separate manner;
completely multiplexing a first configuration; or
partially multiplexing the first configuration and partially performing configuration in a separate manner.

15. The method according to claim 2 or 10, wherein before the sending a target RRC message, the method further comprises:
requesting resumption of an RRC connection at an RRC layer, and initiating transmission in a first transmission manner; and
performing transmission in the first transmission manner at a MAC layer.

16. The method according to claim 15, wherein an initiation condition of transmission in the first transmission manner is at least one of the following:
resumption of the RRC connection is requested at the RRC layer;
the terminal supports transmission in the first transmission manner;
a network supports transmission in the first transmission manner;
the terminal has a valid configuration of the first transmission manner;
the terminal has a valid timing alignment value;
the terminal has a stored nextHopChainingCount value, and the nextHopChainingCount value is provided by suspendConfig in a latest RRC release message; or
a size of the MAC PDU comprising the target RRC message is less than or equal to a transport block size TBS defined in the configuration of the first transmission manner.

17. The method according to claim 15, further comprising:
triggering the RRC layer to instruct the bottom layer to perform transmission in the first transmission manner and send an uplink grant corresponding to transmission in the first transmission manner to the bottom layer.

18. The method according to claim 17, wherein the triggering the RRC layer to instruct the bottom layer to perform transmission in the first transmission manner and send an uplink grant corresponding to transmission in the first transmission manner to the bottom layer comprises at least one of the following:
immediately triggering, after an initiation condition of transmission in the first transmission manner is met, the RRC layer to instruct the bottom layer to perform transmission in the first transmission manner and send the uplink grant corresponding to transmission in the first transmission manner to the bottom layer;
triggering, before resumption of an SRB1 in a process of performing actions related to transmission of either the RRCResumeRequest or the RRCResumeRequest1 message, the RRC layer to instruct the bottom layer to perform transmission in the first transmission manner and send the uplink grant corresponding to transmission in the first transmission manner to the bottom layer;
immediately triggering, after resumption of the SRB 1 in the process of performing actions related to transmission of either the RRCResumeRequest or the RRCResumeRequest1 message, the RRC layer to instruct the bottom layer to perform transmission in the first transmission manner and send the uplink grant corresponding to transmission in the first transmission manner to the bottom layer; or
immediately triggering, after submission of either the RRCResumeRequest or the RRCResumeRequest1 message to the bottom layer in the process of performing actions related to transmission of either the RRCResumeRequest or the RRCResumeRequest1 message, the RRC layer to instruct the bottom layer to perform transmission in the first transmission manner and send the uplink grant corresponding to transmission in the first transmission manner to the bottom layer.

19. The method according to claim 2 or 10, wherein before the sending a target RRC message, the method further comprises:
requesting resumption of an RRC connection at an RRC layer, and initiating transmission in a second transmission manner; and
performing transmission in the second transmission manner at a MAC layer.

20. The method according to claim 19, wherein an initiation condition of transmission in the second transmission manner is at least one of the following:
resumption of the RRC connection is requested at the RRC layer;
the terminal supports transmission in the second transmission manner;
a network supports transmission in the second transmission manner;
the terminal has a stored nextHopChainingCount value, and the nextHopChainingCount value is provided by suspendConfig in a latest RRC release message;
all parameters related to transmission in the second transmission manner are configured in system information acquired by the terminal; or
a size of the MAC PDU comprising the target RRC message is less than or equal to a transport block size TBS defined in a configuration of transmission of the second transmission manner.

21. The method according to claim 19, further comprising:
triggering the RRC layer to configure the bottom layer to perform transmission in the second transmission manner, which is at least one of the following:
immediately triggering, after an initiation condition of transmission in the second transmission manner is met, the RRC layer to configure the bottom layer to perform transmission in the second transmission manner;
triggering, before resumption of an SRB1 in a process of performing actions related to transmission of either the RRCResumeRequest or the RRCResumeRequest1 message, the RRC layer to configure the bottom layer to perform transmission in the second transmission manner;
immediately triggering, after resumption of the SRB1 in the process of performing actions related to transmission of either the RRCResumeRequest or the RRCResumeRequest1 message, the RRC layer to configure the bottom layer to perform transmission in the second transmission manner; or
immediately triggering, after submission of either the RRCResumeRequest or the RRCResumeRequest1 message to the bottom layer in the process of performing actions related to transmission of either the RRCResumeRequestor the RRCResumeRequest1 message, the RRC layer to configure the bottom layer to perform transmission in the second transmission manner.

22. The method according to claim 1, wherein when the target RRC message is an RRC message related to a configuration of a first transmission manner, the terminal has the need to send the target RRC message to the network side device in a case that at least one of the following is met:
the terminal supports transmission in the first transmission manner;
a network supports transmission in the first transmission manner;
a size of a MAC PDU comprising the target RRC message is less than or equal to a maximum transport block size TBS supported by the terminal that is defined based on a terminal category; or
the terminal meets at least one of the following: the terminal is interested in the configuration of the first transmission manner, the terminal is no longer interested in the configuration of the first transmission manner, or the terminal needs to update the configuration of the first transmission manner.

23. The method according to claim 1, wherein when the target RRC message is an RRC message related to multi-cast broadcast service MBS counting, the terminal has the need to send the target RRC message to the network side device in a case that at least one of the following is met:
the terminal has an MBS capability;
a network supports an MBS;
a size of a MAC PDU comprising the target RRC message is less than or equal to a maximum TBS supported by the terminal that is defined based on a terminal category;
an RRC layer of the terminal receives a control message related to MBS counting that is sent by the network side device; or
the terminal is receiving or is interested in receiving at least one MBS indicated in the control message related to MBS counting.

24. The method according to claim 1, wherein when the target RRC message is an RRC message related to an MBS interest indication, the terminal has the need to send the target RRC message to the network side device in a case that at least one of the following is met:
the terminal has an MBS capability;
a network supports an MBS;
a size of a MAC PDU comprising the target RRC message is less than or equal to a maximum TBS supported by the terminal that is defined based on a terminal category;
the terminal receives control information related to the MBS that is sent by the network side device;
the terminal enters or leaves a service area;
an MBS session starts or stops;
content of an MBS interest indication message changes; or
a cell or a base station that sends the control information related to the MBS changes.

25. A message receiving method, applied to a network side device, the method comprising:
receiving a target RRC message from a terminal, wherein
the target RRC message is an RRC message that requires activated access stratum security; and the target RRC message is sent in a non-RRC connected state in a case that the terminal is in the non-RRC connected state and has a need to send the target RRC message.

26. The method according to claim 25, wherein the receiving a target RRC message from a terminal comprises:
receiving the target RRC message from the terminal through a MAC PDU, wherein
the target RRC message and either an RRCResumeRequest or an RRCResumeRequest1 message are multiplexed in the MAC PDU.

27. The method according to claim 25, wherein in a case that the target RRC message is an RRC message related to a configuration of transmission in a first transmission manner, the method further comprises:
sending indication information indicating that a network supports transmission in the first transmission manner to the terminal.

28. The method according to claim 25, wherein in a case that the target RRC message is an RRC message related to MBS counting, the method further comprises at least one of the following:
sending indication information indicating that a network supports an MBS to the terminal; or
sending a control message related to MBS counting to the terminal.

29. The method according to claim 25, wherein in a case that the target RRC message is an RRC message related to an MBS interest indication, the method further comprises at least one of the following:
sending indication information indicating that a network supports an MBS to the terminal; or
sending control information related to the MBS to the terminal.

30. A message sending apparatus, applied to a terminal, the apparatus comprising:
a first sending module, configured to send a target RRC message in a non-RRC connected state in a case that the terminal is in the non-RRC connected state and has a need to send the target RRC message to a network side device, wherein
the target RRC message is an RRC message that requires activated access stratum security.

31. A message receiving apparatus, applied to a network side device, the apparatus comprises:
a receiving module, configured to receive a target RRC message from a terminal, wherein
the target RRC message is an RRC message that requires activated access stratum security; and the target RRC message is sent in a non-RRC connected state in a case that the terminal is in the non-RRC connected state and has a need to send the target RRC message.

32. A communication device, comprising a processor, a memory, and a program or instructions stored in the memory and executable on the processor, the program or instructions, when executed by the processor, implementing the steps of the message sending method according to any one of claims 1 to 24, or the steps of the message receiving method according to any one of claims 25 to 29.

33. A readable storage medium, storing a program or instructions, the program or instructions, when executed by a processor, implementing the steps of the message sending method according to any one of claims 1 to 24, or the steps of the message receiving method according to any one of claims 25 to 29.

34. A chip, comprising a processor and a communication interface, the communication interface being coupled to the processor, and the processor being configured to run a program or instructions to implement the steps of the message sending method according to any one of claims 1 to 24, or the steps of the message receiving method according to any one of claims 25 to 29.

35. A computer program product, stored in a non-volatile storage medium, the computer program product being executed by at least one processor to implement the steps of the message sending method according to any one of claims 1 to 24, or the steps of the message receiving method according to any one of claims 25 to 29.

36. A communication device, configured to implement the steps of the message sending method according to any one of claims 1 to 24, or the steps of the message receiving method according to any one of claims 25 to 29.
